# EUROPEAN PATENT APPLICATION

(11) **EP 1 193 500 A2**
(43) Date of publication of application: **03.04.2002**
(21) Application number: 01850164.3
(22) Date of filing: 21.09.2001
(51) Int. Cl.: G01P 3/44

(54) **Bearing housing with speed measurement device**

(30) Priority: 28.09.2000 SE 0003483
(71) Applicant: Aktiebolaget SKF, S-415 50 Göteborg (SE)
(72) Inventor: Östling, Sture, 641 25 Katrineholm (SE); Eriksson, Reijo, 641 47 Katrineholm (SE); Axelsson, Uno, 641 35 Katrineholm (SE)
(74) Representative: Westman, P. Börje I.

(57) **Abstract**

A bearing housing (3) with a speed measurement device incorporating a sensor (12), arranged to detect the rotational speed of a shaft (1) supported in a bearing (2) in the bearing housing, said sensor being arranged to detect at least one marking rotating with the shaft and having a cable (14) connected to an external evaluation unit, wherein the marking is an irregular surface portion (17) of a component (9) present in the bearing housing (3) for another mechanical purpose and rotating with the shaft (1).

## Description

The present invention refers to a bearing housing with a speed measurement device, in accordance with the preamble of the accompanying claim 1.

In many different circumstances it can be of great interest to determine the rotational speed of a rotating shaft supported in bearings disposed in a bearing housing, i.a. for establishing sudden variations in said speed. For such purposes it has earlier been used different solutions incorporating e.g. making some sort of marking in the shaft itself, which marking then has been detected optically. However this method can give a questionable result, as fat contained in the bearing housing for lubricating purposes, occasionally may cover one or more of the markings, thereby giving improper readings.

Furthermore it has been designed solutions utilising magnetic markings, which have been detected by sensors positioned in end covers of the bearing housing.

These earlier used solutions require that the shaft is machined in some way or in another manner is provided with an additional marking, and besides being rather expensive they are not always particularly reliable, due to various reasons for disturbance.

The purpose of the present invention is to provide a simple, inexpensive and reliable measurement device in a bearing housing, for metering the rotational speed of a shaft supported in at least one bearing in said bearing housing and particularly at low rotational speeds of up to e.g. 900 rpm. The purpose of the invention has been achieved with a bearing housing with a speed measurement device incorporating a sensor, arranged to detect the rotational speed of a shaft supported in a bearing in the bearing housing, said sensor being arranged to detect at least one marking rotating with the shaft and having a cable connected to an external evaluation unit, in the fact that the marking is an irregular surface portion of a component present in the bearing housing for another mechanical purpose and rotating with the shaft.

Hereinafter, the invention will be further described and elucidated by way of a preferred, but non-limiting embodiment shown in the accompanying drawings.

Fig. 1 shows in a side view a bearing housing with a measurement device in accordance with the invention, wherein a part of the bearing housing outer wall has been cut out for increasing the clarity of the arrangement.

Fig. 2 is a side view of the upper half of the bearing housing according to Fig. 1.

Fig. 3 shows a front view of the upper half of the bearing housing according to Fig. 2, with a portion of the housing wall cut away around the position of a sensor fitted to the upper bearing housing half, according to Fig. 2.

Fig. 4 and 5 show separately an element provided in the interior of the bearing housing in cross section and in a planar side view respectively.

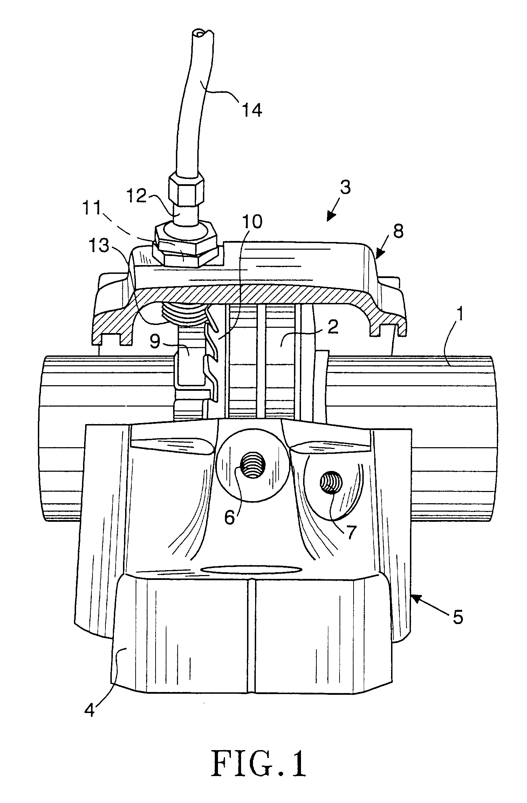

Fig. 1 shows a portion of a shaft 1 rotatably supported in a bearing 2, which is fitted in a seat in a bearing housing 3. The bearing housing is shown from an end face and has a base 4 made in on piece with a first, lower bearing housing half 5. In the embodiment shown, this lower bearing housing half 5 has a pair of threaded through-holes 6, 7 intended for fitting of sensors used for vibration measuring purposes. These through-holes 6, 7 and their associated sensors have nothing to do with the present invention and therefor they will not be further discussed hereinafter.

The bearing housing further incorporates a second, upper bearing housing half in the art referred to as a cap 8, which is shown with a portion cut away, for illustrating a part of the interior of the bearing housing. The bearing 2 is attached to the shaft I with aid of a lock nut 9 and a locking washer 10. The cap 8 is also provided with a threaded through-hole 11, in which is inserted a sensor 12, which has its free end 13 positioned at a short distance from the outer envelope surface of the lock nut 9. The sensor 12 is via a cable 14 connected to a not shown external evaluation unit, for establishing and detecting the rotational speed of the shaft, i.e. of the lock nut 9, which rotates together with the shaft 1.

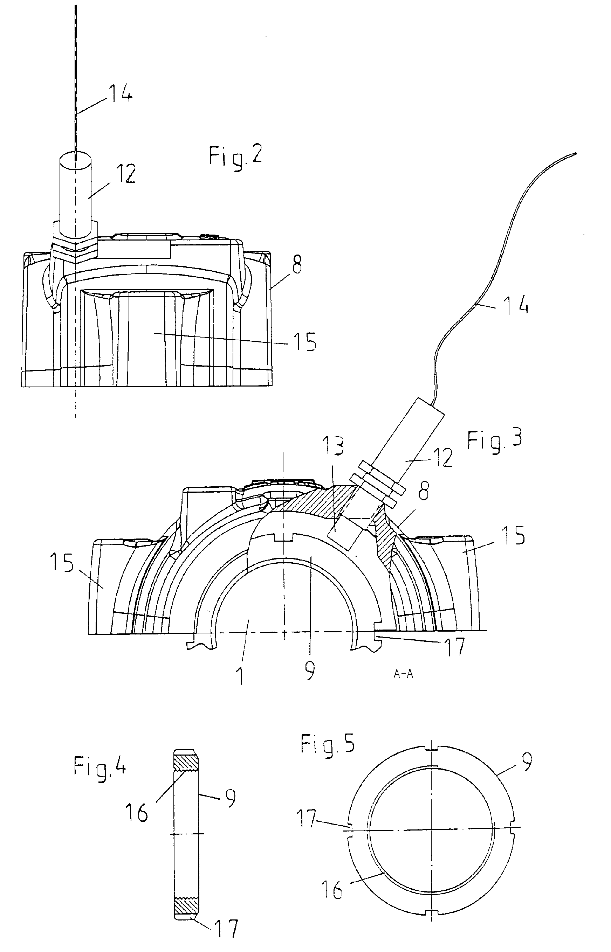

Fig. 2 shows in an end view the cap 8 and the positioning of the sensor 12 with its cable 14. In the centre of the end side of the housing is provided a raised portion 15, which forms a seat for a not shown bolt for connecting the cap 8 to the first, lower bearing housing half or base.

In Fig. 3 the bearing housing cap 8 according to Fig. 2 is shown in a front view, where a portion has been cut out in the region of the sensor 12 for better illustrating the interior of the bearing housing. At the cut out portion can be seen a portion of the lock nut 9, which is used in a conventional manner for arresting the bearing 2 (see Fig. 1) to the shaft 1. Such a lock nut 9 is shown more in detail in cross section in Fig. 4 and in a planar end view in Fig. 5, and it comprises a ring member having an internal thread 16 for connection to an external thread on the shaft 1, and by means of which the bearing can be clamped against a shoulder on the shaft or the like. Externally the ring member is provided with a number of key grip recesses, in the embodiment shown four equidistantly positioned recesses 17 for permitting a hook spanner to be applied for tightening the lock nut 9 on a thread in the shaft or on a sleeve.

As seen in Fig. 3 the free end 13 of the sensor 12 is positioned in close proximity to the outer envelope surface of the lock nut 9, and with its longitudinal direction perpendicularly thereto. The spacing between the end surface of the sensor and the outer envelope surface of the lock nut is partly dependent on the type of sensor used, but distances up to about 2 mm are useful, although the best result is obtained if the distance is about 1 mm.

When tightened the lock nut 9 is fixedly attached to the shaft 1, so that it will rotate at the same speed as the shaft, and for detecting this rotational speed is used an inductive sensor, for instance a sensor from Gerhard Balluff GmbH & Co, Neuhausen, Germany, available on the market under the name Balluff BES 516-325-E5-Y-S49.

With this sensor 12 positioned with its free end 13 at a distance of, preferably 1 mm from the outer envelope surface of the lock nut 9, the sensor will detect the passage of each recess 17 in the lock nut 9 as these recesses 17 during the rotation move past the sensor 12. Each passage of a recess produces a pulse which via the cable 14 is transferred to the not shown external evaluation unit. In this manner each 360° revolution results in 4 pulses being transferred to the evaluation unit, and this unit therefore can establish in a simple manner the current rotational speed of the shaft, also at comparatively low speeds, e.g. between 50 rpm and 900 rpm.

By utilising the recesses present in a lock nut rotating with the shaft, and which lock nut primarily is intended for arresting the inner ring of the bearing to the shaft, it is possible in a very simple and convenient manner to pick up signals representative for the rotational speed with a standard sensor, without the necessity to provide the bearing or the shaft with any especial markings of the type referred to in the introductory part of the specification.

By using an inductive sensor of this type, positioned at a very short distance from the surface to be scanned the risk for disturbance in the metering result, caused by e.g. lubrication fat and the like is eliminated, when measuring against the metallic lock nut 9 and the evenly spaced recesses 17 therein.

Of course it is not necessary to use lock nuts of the type illustrated, having four key grip recesses but it is of course also possible to use such lock nuts having eight, evenly spaced apart recesses, whereby the evaluation unit is programmed to count eight pulses for 360 degrees rotation.

By utilising a component - i.e. the lock nut for arresting the bearing - which is already present in the bearing housing, the only additional thing needed is to provide a threaded hole for the sensor.

In the embodiment of the invention shown in the drawings and described in connection thereto, the component present in the bearing housing, thus is a lock nut intended primarily for other mechanical purpose, i.e. arresting the bearing to the shaft, and the irregular surface portion functioning as the markings are the key grip recesses present in the outer envelope surface of the lock nut for allowing tightening thereof.

However the invention is not limited to such a component as a lock nut, but this could be substituted e.g. by a locking washer as illustrated at 10 in Fig. 1, and the irregular surface portion must not necessarily be recesses, but can instead be other surface irregularities, such as elevated portions or the like.

## Claims

1. A bearing housing (3) with a speed measurement device incorporating a sensor (12), arranged to detect the rotational speed of a shaft (1) supported in a bearing (2) in the bearing housing, said sensor being arranged to detect at least one marking rotating with the shaft and having a cable (14) connected to an external evaluation unit,
**characterized therein,**
that the marking is an irregular surface portion (17) of a component (9) present in the bearing housing (3) and primarily intended for another mechanical purpose and rotating with the shaft (1).

2. A device as claimed in claim 1,
**characterized therein,**
that the sensor (12) is an inductive sensor, whereas the component (9) having the marking is of a metallic material.

3. A device as claimed in claim 1 or 2,
**characterized therein,**
that the component (9) having the marking is a lock nut (9) for arresting the bearing (2) to the shaft, and the at least one marking is key grip recesses (17) evenly distributed around the outer circumference of the lock nut outer envelope surface.

4. A device as claimed in anyone of the preceeding claims,
**characterized therein,**
that a free end (13) of the sensor (12) is positioned at a short distance from the outer envelope surface of the component (9) and with the longitudinal direction of the sensor perpendicular to the outer envelope surface of the component (9).

5. A device as claimed in claim 4,
**characterized therein,**
that the distance between the component (9) and the free end (13) of the sensor (12) is up to 2 mm, and preferably about 1 mm.
